# EUROPÄISCHE PATENTSCHRIFT

(11) **EP 0 944 655 B1**
(45) Veröffentlichungstag und Bekanntmachung des Hinweises auf die Patenterteilung: **26.02.2003**
(21) Anmeldenummer: 97952890.8
(22) Anmeldetag: 05.12.1997
(51) Int. Cl.: C08F 236/14, C08F 242/00

(54) **POLYMER AUF DER BASIS EINES KONJUGIERTEN DIENS UND EINER DIENOPHILEN KOMPONENTE**
POLYMER BASED ON A CONJUGATED DIENE AND A DIENOPHILIC COMPONENT
POLYMERE A BASE D'UN DIENE CONJUGUE ET D'UN COMPOSANT DIENOPHILE

(30) Priorität: 13.12.1996 DE 19651796; 20.12.1996 DE 19653373
(43) Veröffentlichungstag der Anmeldung: 29.09.1999
(73) Patentinhaber: Henkel Kommanditgesellschaft auf Aktien, 40589 Düsseldorf-Holthausen (DE)
(72) Erfinder: KLEIN, Johann, D-40593 Düsseldorf (DE); BÖGE, Kai, D-40217 Düsseldorf (DE); KLAUCK, Wolfgang, D-40670 Meerbusch (DE)
(86) Internationale Anmeldenummer: EP9706824
(87) Internationale Veröffentlichungsnummer: WO98025978

(56) Entgegenhaltungen:
- GB-A- 841 700
- US-A- 4 775 730

## Beschreibung

Die Erfindung betrifft ein Polymer auf der Basis eines konjugierten Diens und einer dienophilen Komponente sowie seine Herstellung und Verwendung.

Derartige Polymere sind bekannt. So wird in der japanischen Patentschrift JA 93/1121 ein Copolymer beschrieben, welches aus einem Maleinsäureanhydrid, einem konjugierten Dien und einem aliphatischen Monoolefin hergestellt wurde. Als konjugiertes Dien wurde Butadien und als aliphatisches Monoolefin Isobuten eingesetzt. Die Polymerisation erfolgte in Gegenwart eines Peroxids bei Temperaturen von ca. 150 °C. Das Molekulargewicht Mw liegt im Bereich von 500 bis 50 000.

Iwamoto und Yuguchi beschreiben in Bul. Chem. Soc. Japan 40 (1967), S. 1272 bis 1273 alternierende Copolymerisate aus 2,4-Hexadien und Maleinsäure-Anhydrid. Die Polymerisation wird durch Erwärmen und/oder durch Radikalbildende Initiatoren gestartet werden. Sie kann sowohl in Masse als auch in Lösung stattfinden. Die Ausbeuten betragen etwa 2 bis 97 %.

In der japanischen Patentschrift JA 93/295041 wird ebenfalls ein Copolymer aus einem konjugierten Dien und Maleinsäureanhydrid beschrieben. Konjugierte Diene sind Butadien oder Isopren. Als Katalysator dient ein Acetyl-Acetonat mit Metallen der VII. oder VIII. Gruppe. Das Polymer wird zum Beschichten, zur Oberflächenbehandlung, zum Dichten und als Klebstoff verwendet.

Diese bekannten Polymere haben folgende Nachteile:
Zum einen sind beide Monomere petrochemisch basiert und führen so zu einer negativeren ökologischen Bewertung im Vergleich zur Verwendung von Monomeren auf der Basis nachwachsender Rohstoffe. Zum anderen ist die Rohstoffpalette bei den petrochemischen konjugierten Dienen auf Butadien und dessen einfache Derivate bzw. Homologe beschränkt. Dabei bedeutet der Einsatz dieser kurzkettigen Diene nicht nur einen verfahrenstechnischen Nachteil wegen der Flüchtigkeit und leichten Entflammbarkeit bzw. Brennbarkeit dieser Monomere. Auch aus chemischer Sicht erlauben diese Verbindungen nur geringe Variationen in den chemischen Eigenschaften der Polymere. So sind beispielsweise keine Umsetzungen mit funktionaliserten Dienen möglich bzw. beschrieben.

Es sind auch Reaktionsprodukte von Maleinsäureanhydrid mit Fettsäuren mit konjugierten Doppelbindungen bekannt. Hierbei handelt es sich jedoch um Additionen gemäß der Diels-Alder-Reaktion. Diese Reaktion wird z.B. von Behr und Handwerk in Sci. Technol. 94 (1992) auf den Seiten 206 bis 208 beschrieben.

In der US-A-4,775,730 werden nichtklebrige Copolymere von p-Acetoxystyrol mit mehrfach ungesättigten Comonomeren beschrieben, nämlich mit Alkylestern von Carbonsäuren mit einer konjugierten C-C-Doppelbindung, Allylester einer ethylenisch ungesättigten Carbonsäure, 2,5-Dimethyl-2,4-hexadien oder 2-Chlor-2,4-hexadien. Darüber hinaus können auch noch weitere Comonomere wie Alkyl(meth)acrylate oder (Meth)acrylnitril verwendet werden. Von Dicarbonsäuren ist jedoch keine Rede.

Die erfindungsgemäße Aufgabe bestand darin, neue Polymere auf der Basis nachwachsender Rohstoffe und mit hohen Gebrauchseigenschaften auf wirtschafttliche Weise herzustellen.

Die erfindungsgemäße Lösung ist den Patentansprüchen zu entnehmen. Sie besteht im wesentlichen aus einem Polymer, welches herstellbar ist aus
A) zumindest einer aliphatischen ungesättigten Carbonsäure mit 6 bis 32 C-Atomen mit konjugierter C-C-Doppelbindung bzw. deren Derivate,
B) zumindest einer der Komponenten: Malein-, Citracon-, Itacon-, Aconit-, 3,4,5,6-Tetrahydrophthalsäure sowie deren Derivate und gegebenenfalls
C) zumindest einer copolymerisierbaren Alken-Komponente ohne Elektronenakzeptor-Substituenten,
wobei das Molverhältnis der Komponenten A : B : C im Bereich von 1 : 0,1 bis 1,0 : 0 bis 10 liegt und das Molekulargewicht M_{w} der Copolymeren über 5000 liegt.

### Komponente A

Unter "Fettsäure mit konjugierter C-C-Doppelbindung" (Komponente A) ist eine aliphatische, ungesättigte Carbonsäure mit 6 bis 32, insbesondere mit 16 bis 24 C-Atomen zu verstehen, die zwei oder mehrere C-C-Doppelbindungen in Konjugation enthält. Diese sogenannte Konjugenfettsäure kann in funktionalisierter Form als Ester und Amid für die Polymerisation eingesetzt werden.

In einer bevorzugten Ausführungsform der Erfindung werden Ester oder Partialester der Konjugenfettsäuren mit ein- oder mehrwertigen Alkoholen verwendet. Unter "Alkoholen" sind Hydroxyl-Derivate von aliphatischen oder alicyclischen gesättigten oder ungesättigten linearen oder verzweigten Kohlenwasserstoffen zu verstehen. Es kommen sowohl 1- als 2- oder noch höherwertige Alkohole in Frage. Konkrete Beispiele aus dem niedermolekularen Bereich sind Methanol, Ethanol, Propanol, Butanol, Pentanol, Decanol, Octadecanol, 2-Ethylhexanol, 2-Octanol, Ethylenglykol, Propylenglykol, Trimethylenglykol, Tetramethylenglykol, Butylenglykol-2,3, Hexamethylendiol, Octamethylendiol, Neopentylglykol, 1,4-Bishydroxymethyl-cyclohexan, Guerbetalkohol, 2-Methyl-1,3-Propandiol, Hexantriol-(1,2,6), Glycerin, Trimethylolpropan, Trimethylolethan, Pentaerythrit, Sorbit, Formit, Methylglycosid, Butylenglykol, die reduzierten Dimer- und Trimer-Fettsäuren. Von Kollophoniumharzen abgeleitete Alkohole wie Abietylalkohol können ebenfalls für die Veresterung verwendet werden. Es können auch OH-haltige tertiäre Amine verwendet werden. Ferner sind auch Alkohole mit aromatischen Substituenten brauchbar, z.B. Monophenylglykol und Benzylalkohol. Auch polymere Polyole sind brauchbar, z.B. Polyethylen-, Polypropylen- und Polybutylenglykole.

Als Derivate können auch Amide der Konjugenfettsäuren verwendet werden. Diese können durch Umsetzung mit Ammoniak, primären und sekundären Aminen oder Polyaminen erhalten werden, z.B. mit Monoethanolamin, Stearylamin, Diethanolamin, Ethylendiamin und Hexamethylendiamin.

Die "Fettsäure mit konjugierter C-C-Doppelbindung" kann auf verschiedene Art und Weise erhalten werden.

Die konjugierte Doppelbindung kann schon ursprünglich vorhanden gewesen sein (natürlich vorkommende Konjugenfettsäuren).
Die konjugierte Doppelbindung kann durch selektive Hydrierung von Fettsäuren mit konjugierten Dreifach-Bindungen (Konjugen-Fettsäuren durch selektive Hydrierung) gebildet werden.
Die konjugierte Doppelbindung kann auch durch Isomerisierung von Isolen-Fettsäuren entweder auf thermischem Wege oder durch Einwirkung von Katalysatoren (Konjugen-Fettsäuren durch Isomerisierung) gebildet werden. Zum Beispiel werden die isolierten Doppelbindungen in Linol-, Linolen-, Arachidon-, Klupanodonsäuren durch Einwirkung von Katalysatoren in konjugierte Doppelbindungen überführt. Konkrete Isomerisierungskatalysatoren sind Nickel auf Träger, Übergangsmetalle/Edelmetalle, tert.-Butylhypochlorid, Jod/Jodid, Schwefeldioxid, Selen/selenhaltige Katalysatoren, Metallkomplexe, Alkalimetalle, dotierte Clays, Schwefelhaltige Katalysatoren, Alkalialkoholate und Alkalihydroxide.
Die konjugierte Doppelbindung kann weiterhin durch Wasserabspaltung von Hydroxy-Fettsäuren entweder aus Hydroxy-Verbindungen, die bereits eine Doppelbindung in entsprechender Anordnung enthatten, oder aus Dihydroxy-Fettsäuren gebildet werden. Die Dehydratisierung hydroxylgruppenhaltiger Fettstoffe zu konjugierten Fettstoffen wird im wesentlichen durch Zugabe saurer Katalysatoren erreicht. In der Literatur sind z.B. für die Dehydratisierung von Ricinusöl eine Vielzahl von Katalysatoren wie z.B. Heteropolysäuren (US 2261633, 1939), Na2S2O7 (Paint Manuf. 19, 118, 1949), Schwefelsäure (US 2392119, 1946), phosphorige Säure (GB 671368, 1952), Borsäure (US 2278425, 1939) und Phthalsäureanhydrid (US 224678) beschrieben, die zu dehydratisierten Ricinusölen führen. Die konjugierten Fettsäuren können aus diesen Ölen durch Hydrolyse gewonnen werden. Es ist jedoch auch möglich, acetylierte Hydroxyfettstoffe durch thermische Esterpyrolyse in die konjugierten Fettsäuren zu überführen. So wird z.B. in der DE-C3-20 18 712 die Pyrolyse von Diacetoxystearinsäuremethylester bei 420 bis 580 °C beschrieben, die zu Konjugenanteilen von 80% führen soll.
Die konjugierte Doppelbindung kann schließlich durch Partial- oder Total-Synthesen hergestellt werden.

Vor der Polymerisation muß gegebenenfalls eine Stereoisomerisierung in die E,Z-, Z,E- oder Z,Z-Konfiguration durchgeführt werden.
Als Fettsäuren mit konjugierten Doppelbindungen seien konkret genannt:
- Natürlich vorkommende Konjugenfettsäuren wie Sorbinsäure, 2,4-Decadiensäure, 2.4-Dodecadiensäure, 10,12-Octadecadiensäure, 9-Hydroxy-10,10-octadecadiensäure, 13-Hydroxy-9,11-octadecadiensäure, 9,14-Dihydroxy-10,12-octadecadiensäure, 9,12,14-Octadecatriensäure, 8,10,12-Octadecatriensäure, Elaeostearinsäure (Trichosansäure: Punicinsäure; Catalpasäure), Licansäure, Kamolensäure, Parinarsäure;
- Konjugen-Fettsäuren durch selektive Hydrierung wie Isansäure, Isanolsäure, Ximeninsäure, Matricariasäure, Lachnophyllsäure, Mycomycinsäure;
- Konjugen-Fettsäuren durch Isomerisierung von Isolen-Fettsäuren wie z.B. Edenor UKD 60/10 (Fa. Henkel);
- Konjugenfettsäuren durch Wasserabspaltung von Hydroxy-Fettsäuren wie Ricinen-Fettsäuren aus Ricinolsäure.

Bevorzugte Komponenten A sind: Ricinenfettsäure, Ricinenfettsäuremethylester, UKD-Fettsäuren, UKD-Fettsäuremethylester, dehydratisiertes Ricinusöl, konjugiertes Färberdistelöl und Sonnenblumenöl. Bei den UKD-Fettsäuren bzw. - Fettsäuremethylestem handelt es sich um Fettsäuren bzw. Fettsäuremethylester mit konjugierten Doppelbindungen, die aus mehrfach ungesättigten Fettsäuren herstellbar sind, insbesondere auf der Basis von Sonnenblumenöl.

### Komponente B1

Bei den genannten Verbindungen handelt es sich um Alken- oder Alkin-Komponenten mit Elektronenakzeptor-Substituenten mit 3 bis 100, insbesondere mit 4 bis 32 C-Atomen, die in der Nachbarschaft zu der C-C-Doppelbindung oder C-C-Dreifachbindung mindestens einen Substituenten mit einer Elektronenanziehenden Eigenschaft haben, z.B. eine der folgenden Gruppen: -CN, -COOH, -CHO, -COR, -COOR, -CONH2, -CONHR -CONR2 oder -NO2, wobei R eine Alkylgruppe mit 1 bis 98 C-Atomen darstellt.

Als Derivate der Säuren Maleinsäure, Citraconsäure, Itaconsäure, Arconitsäure und 3,4,5,6-Tetrahydrophthalsäure können das Anhydrid, Imid, Alkylimid mit 1 bis 30 C-Atomen in der Alkylgrupppe, Nitril, Amid, Alkyl- und Arylamid mit 1 bis 30 C-Atomen in der Alkyl/Arylgruppe. Aldehyd, Ester und Halbester von Alkoholen mit 1 bis 30 C-Atomen verwendet werden. Als Beispiele seien genannt Maleinsäureanhydrid, Maleinimid, Maleinsäuredinitril, Maleinsäuredihexylester, Maleinsäurebenzylbutylester, Fumarsäuredihexylester, Fumarsäuredinitril, Fumarsäuremonoethylester, Itaconsäureanhydrid, Itaconsäuredimethylester, Acetylendicarbonsäurediethylester und 3,4,5,6-Tetrahydrophthalsäureanhydrid. Es können auch Gemische der genannten Derivate verwendet werden.

### Komponente B2

Auch die entsprechenden Derivate folgender Säuren können als zweite Komponente neben den obengenannten Säuren verwendet werden: Crotonsäure, Zimtsäure, Acrylsäure, Methacrylsäure, Cyanacrylsäure und 2,4-Pentadiensäure. Als Derivate kommen in Frage: Amid, Alkyl- und Dialkylamid mit 1 bis 30 C-Atomen in der Alkylgrupppe, Nitril, Aldehyd, Ester und Halbester von Alkoholen mit 1 bis 30 C-Atomen. Als Beispiele seien genannt Methyl-, Ethyl-, n-Propyl-, n-Butyl-, Isopropyl-, Isobutyl-, sec.-Butyl-, und tert.-Butyl-, n-Pentyl-, n-Hexyl, 2-Ethylhexyl-, Cyclohexyl-, n-Heptyl-, n-Octyl-, Phenylethyl-, 2-Methoxyethyl-, 2-Butoxyethyl-, Phenylpropyl- und Furfurylacrylat und -methacrylat. Weiterhin sind möglich: Zimtsäureethylester, Crotonsäureamid, Methacrylamid, Acrylamid, Cyanacrylsäureethylester, Crotonsäuremethylester, Crotonsäurenitril, Zimtsäurebenzylester und Zimtaldehyd.

### Komponente C

Unter einem "Alken ohne Elektronenakzeptor-Substituenten" (Komponente C) sind z.B. Vinylether, Vinylester, α-Olefine, Styrol-Derivate, konjugierte Kohlenwasserstoffe und Vinylpyrrolidon zu verstehen, wobei die Alkylgruppe der Ether und Ester 1 bis 30 C-Atome enthält. Als Beispiele seien genannt: Vinylacetat, - propionat, - butyrat, - laurat und -stearat, Ethylvinylether, 1-Decen sowie α-Methylstyrol, β-Methylstyrol, Vinyltoluol und tert.-Butylstyrol, Chlorstyrol, Butadien und Isopren. Bevorzugte Komponenten C sind: Vinylether, Vinylester, Styrol und Vinylpyrrolidon.

Das Molverhältnis der Komponenten A, B und C liegt im Bereich von 1 : 0,1 bis 10 : 0 bis 10, vorzugsweise im Bereich von 1 : 0,5 bis 1,5: 0,2 bis 10.

Das mittlere Molekulargewicht (Gewichtsmittel Mw) der erfindungsgemäßen Polymere liegt über 5 000, vorzugsweise über 10 000. Es wurden Molekulargewichte bis 1 700 000 g/Mol erhalten. Die Molekulargewichte wurden mittels Gelpermeationschromatographie (siehe Beispiele) bestimmt.

Die Eigenschaften der erfindungsgemäßen Polymere hängen von den Edukten und den Reaktionsbedingungen ab. Die Produkteigenschaften reichen von weichen, stark haftklebrigen über gummielastischen bis zu klebefreien, festen Polymeren.

Die erfindungsgemäßen Polymere lassen sich grundsätzlich einfach durch Mischen der Reaktionskomponenten A und B sowie gegebenenfalls C und anschließendes Erwärmen herstellen.

Die erfindungsgemäßen Polymeren lassen sich sowohl in Masse als auch in Lösung bzw. Dispersion herstellen. Geeignet sind Lösungsmittel, die nicht radikalinhibierend wirken. Als Lösungsmittel werden z.B. Ether wie Tetrahydrofuran und Dioxan, Alkohole wie Methanol, Ethanol und Isopropanol, Ester wie Essigsäurethylester und -propylester sowie n-Butylacetat, Glykoletheracetate wie Methyl-, Ethyl- und Butylglycolacetat, Ketone wie Aceton und Cyclohexanon, Dialkylcarbonsäureamide wie Dimethylformamid, Dimethylacetamid und N-Methylpyrrolidon, Aromaten wie Benzol, Toluol und die Xylole, aliphatische Kohlenwasserstoffe wie Hexan und Isooctan, alicyclische Kohlenwasserstoffe wie Cyclohexan und chlorierte Kohlenwasserstoffe wie Methylenchlorid, Chloroform, Dichlorethan und tert.-Butylchlorid verwendet. Es ist ebenso möglich, als Lösungsmittel Stoffe zu verwenden, die wegen ihres niedrigen Dampfdruckes üblicherweise als Weichmacher eingesetzt werden, z.B. Fettsäureester, Polyethylenglykole und Phthalsäureester.

Es ist aber auch möglich, die Polymerisation als Emulsionspolymerisation (Tröpfchenpolymerisation) durchzuführen.

Wenn keine Initiatoren verwendet werden, sollte die Reaktionstemperatur im Bereich von 20 bis 250, insbesondere von 80 bis 200 °C liegen. Da die Reaktion exotherm abläuft, genügt es, das Reaktionsgemisch auf Temperaturen im Bereich von 40 bis 150 °C zu erwärmen. Verwendet man Radikal-bildende Initiatoren, so genügen Temperaturen im Bereich von 0 bis 200, insbesondere von 30 bis 150 °C als Reaktionstemperatur.

Als Radikalstarter seien genannt: Acetylcyclohexansulfonyl-peroxid, Peroxydicarbonate, Diisopropylperoxydicarbonat, t-Amylperneodecanoat, t-Butylperneodecanoat, t-Amyl-perpivalat, Bis-(2,4-dichlorbenzoyl)-peroxid, t-Butylperpivalat, Bis-(3,5,5-trimethylhexanoyl)-peroxid, Dioctanoylperoxid, Didecanoylperoxid, Dilauroylperoxid, Bis-(2-methylbenzoyl)-peroxid, Succinylperoxid, Diacetylperoxid, Dibenzoylperoxid, t-Butyl-per-2-ethylhexanoat, Bis-(4-chlorbenzoyl)-peroxid, t-Butylperisobutyrat, t-Butylpermaleinat, 1,1-Bis-(t-butylperoxy)-3,3,5-trimethyl-cyclohexan, 1,1-Bis-(t-butylperoxy)-cyclohexan, t-Butylperoxy-isopropylcarbonat, t.Butyl-per-3,5,5-trimethylhexanoat, 2,5-Dimethylhexan-2,5-diperbenzoat, t-Butylperacetat, t-Amyl-perbenzoat, t-Butylperbenzoat, 2,2-Bis-(t-butylperoxy)-butan, 2,2-Bis-(t-butylperoxy)-propan, Dicumylperoxid, t-Butylcumylperoxid, 3-t-Butylperoxy-3-phenylphthalid, Bis-(t-butylperoxy-isopropyl)-benzol, 2,5-Dimethylhexan-2,5-di-t-butylperoxid, 3,5-Bis(t-butylperoxy)-3,5-dimethyldioxolan-1,2, Di-t-butylperoxid, 2,5-Dimethyl-hexin-3-2,5-di-t-butylperoxid, 3,3,6,6,9,9-Hexamethyl-1,2,4,5-tetraoxacyclononan, p-Menthanhydoperoxid, Pinanhydroperoxid, Diisopropylbenzol-mono-hydroperoxid, Cumolhydroperoxid, t-Butylhydroperoxid, Azo-bis-(2,4-dimethylvaleronitril), Azo-bis-(isobutyronitril), Dibutyl-peroxydicarbonate, Diisononanoylperoxid, t-Butylperisononaoat, Di-t-butylperoxid, 1,1-Bis-(t-butylperoxy)-3,5,5-trimethylcyclohexan, 3,5-Bis-(t-butylperoxy)-3,5-dimethyldioxolan-1,2, 2,5-Dimethyl-hexin-2,5-di-t-butylperoxid, Acetyl-cyclohexansulfonyl-peroxid, Dicyclohexyl-peroxydicar-bonat, Bis(4-t-butylcyclohexyl)-peroxydicarbonat, Di-2-ethylhexyl-peroxydicar-bonat, Dimyristyl-peroxydicarbonat, Dicetylperoxydicarbonat, t-Butyl-perisononanoat, t-Butyl-perbenzoat, t-Butylperpivalat, t-Butylperoximaleinat, t-Butylperoxibenzoat, Dicumylperoxid, Didecanoylperoxid, Methylethylketonperoxid, 2,2'-Acobis-(2,2-dimethylvaleronitril), 2,2'-Azobis-(2,3-dimethylbutylronitril), und 2,2'-Azobisisobutyronitril.

Diese Radikalbildner werden in Mengen von 0,05 bis 10 Gew.-%, insbesondere von 0,1 bis 3 Gew.-%, bezogen auf Komponente A eingesetzt.

Überraschenderweise wurde gefunden, daß bei technischen Konjugenfettsäuren, die als Nebenkomponenten gesättigte und ungesättigte Fettsäuren wie Stearin-Öl-, und Linolsäure enthalten, die Polymerisation nicht inhibiert wird, obwohl gerade die ungesättigten Fettsäuren mit isolierten Doppelbindungen Inhibitoreigenschaften besitzen. Das Reaktionsprodukt wies daher in der Regel genau diese Fettsäuren bzw. deren Derivate als extrahierbaren Nebenbestandteil auf. Die rohen Polymere besaßen daher weichelastische Eigenschaften, die für spezielle Anwendungen vorteilhaft sein können. Durch eine Reinigung, z.B. durch Destillation oder fraktionierte Fällung, konnten weichmacherfreie Polymere hergestellt werden.

Bei einer Polymerisation in Lösung kann das Polymere ausfallen. Falls das nicht der Fall sein sollte, wird es durch Zusatz einer organischen Flüssigkeit, die eine niedrigere oder höhere Polarität als das Reaktionsmedium besitzt, ausgefällt. In der Regel verbleiben die niedermolekularen Stoffe bei dieser Aufarbeitung in Lösung und können somit abgetrennt werden. Durch Lösen und Ausfällen, z.B. mit Aceton/Hexan oder Aceton/Wasser-Gemischen, lassen sich die Polymere auch fraktionieren. Die Polymere können auch destillativ von Monomeren und anderen niedermolekularen Stoffen gereinigt werden.

Die so hergestellten Polymere können direkt zum Beschichten, Kleben, Dichten, Füllen oder als Werkstoff verwendet werden.

Es ist jedoch auch möglich, die reaktiven Gruppen im Polymer ganz oder teilweise umzusetzen. Dafür eignet sich insbesondere die Carbonsäure bzw. deren Derivate, vor allem die Anhydrid-Gruppe des erfindungsgemäßen Polymeren.

Die Reagenzien zur Polymermodifizierung können mono- oder polyfunktionell sein.
Als funktionelle Gruppen sind die aus der organischen Chemie allseits bekannten Funktionalitäten brauchbar. Erwähnt seien vor allem Hydroxy-, Mercapto-, Ether-, Ester-, Carboxyl-, Carboxylat-, Amino- und Amido-Gruppen. Als reaktive Gruppen gegeüber dem Polymer kommen vor allem Epoxi-, Isocyanat-, Mercapto-, Hydroxy- und Amino-Gruppen in Betracht. Als Reagenzien für die Polymermodifizierung seien konkret genannt:
- Alkohole wie Methanol, Ethanol, iso-Propanol, Butanol, langkettige Fettalkohole, ungesättigte Fettalkohole, verzweigte Fettalkohole, Fettalkoholethoxylate, Abietol, Benzylalkohol, Phenoxyethanol, Monoethanolamin, Diethanolamin, Triethanolamin, Ethylenglykol, Propylenglykol, Polyethylenglykole, Polypropylenglykole, 1,6-Hexandiol, 1,12-Dihydroxyoctadecan, Glycerindiacetat, 1,2-O-Isopropyliden-glycerin, Monoacylglyceride, Ricinolsäuremethylester, Milchsäureethylester, Hydroxybuttersäure;
- Amine wie Butylamin, Octadecylamin, Benzylamin, Ethylendiamin, Hexamethylendiamin, Jeffamine, 1,4-Phenylendiamin;
- Epoxide wie Ethylenoxid, Propylenoxid, Cyclohexenoxid, α-Olefinepoxide, epoxidierte Fett und Öle, epoxidierte Fettsäuren und deren Alkylester, Epoxidhärter wie Bisphenol-A-diglycidylether.

Die durch die polymeranaloge Reaktion erhaltenen Verbindungen können ihrerseits weiter umgesetzt werden, z.B. durch oxidative Nachhärtung unter der Einwirkung von Sikkativen, Pfropfung, Dehydratisierung zu Imiden und Umsetzung mit Isocyanaten.

Als besondere Art der Polymermodifizierung sind noch die Bildung von Salzen, die Vulkanisierung, die Nachvernetzung mit Peroxiden und die Hydrierung zu nennen. Bei der Umsetzung mit Salzen ist zu unterscheiden zwischen ein- und mehrwertigen Metalle. Die mehrwertigen Metalle wie z.B. Calcium, Zink und Aluminium führen zu vernetzten Polymeren (lonomeren), wie sie in DE 4211118 beschrieben sind. Auch sonst sind vemetzte Polymere zu erhalten, wenn polyfunktionelle Reagenzien eingesetzt werden.

Die polymeranaloge Umsetzung kann in Masse oder in Lösung erfolgen. Es eignen sich nur Lösungsmittel, die nicht mit den funktionellen Gruppen des Polymers reagieren, z.B. Ether wie Diethylether, tert.-Butylmethylether, Tetrahydrofuran und Dioxan, Ester wie Essigsäurethylester und -propylester sowie n-Butylacetat, Glykoletheracetate wie Methyl-, Ethyl- und Butylglycolacetat, Ketone wie Aceton und Cyclohexanon, Dialkylcarbonsäureamide wie Dimethylformamid, Dimethylacetamid und N-Methylpyrrolidon, Aromaten wie Benzol, Toluol und die Xylole, aliphatische Kohlenwasserstoffe wie Gexan und Isooctan, alicyclische Kohlenwasserstoffe wie Cyclohexan und chlorierte Kohlenwasserstoffe wie Methylenchlorid, Chloroform, Dichlorethan und tert.-Butylchlorid.

Möglich ist jedoch auch, das Reagenz für die Modifizierung als Lösungsmittel zu verwenden. Verwendet werden können z.B. Alkohole wie Methanol, Ethanol oder Isopropanol oder Amine wie Butylamin etc.

Es ist ebenso möglich, bei der Modifizierung als Lösungsmittel einen Weichmacher zu verwenden.

Mit Hilfe dieser polymeranalogen Reaktion lassen sich die primär entstandenen erfindungsgemäßen Polymere in ihren physikalischen und chemischen Eigenschaften weitgehend variieren. So erhält man nach Behandlung mit Methanol ein Weichharz mit extrem klebrigen Eigenschaften. Die Ausfällung von Polymeren mit organischen Flüssigkeiten, die eine niedrigere oder höhere Polarität als das Reaktionsmedium besitzen, führt zu klebfreien elastischen Polymeren, die sich zu transparenten Folien ziehen lassen.

Die erfindungsgemäßen Polymere lassen sich zum Beschichten, Kleben, Dichten, Füllen und als Werkstoff, insbesondere als Schmelzklebstoffe, Klebrigmacher oder als stark klebrige Dispersionen verwenden. Darüber hinaus eignen sich die erfindungsgemäßen Polymere in Form ihrer Salze auch als Builder für Waschmittel, als Stabilisatoren für Emulsionen und als Verdicker.

Die erfindungsgemäßen Polymere bzw. modifizierten Polymere können in Masse, in Lösung oder in Emulsion bzw. Dispersion verwendet werden. Aufgrund der variabel einstellbaren Eigenschaften können sie als Bindemittel, Klebstoffe, klebende Dichtungsmassen und Beschichtungen verwendet werden. Insbesondere eignen sie sich für Substrate mit unterschiedlichem elastischem Verhalten oder unterschiedlichen Wärmeausdehnungskoeffizienten, was in der Regel bei unterschiedlichen Substraten der Fall ist. Als Substrate kommen in Frage: Metalle wie Aluminium, Holz, Pappe, Papier, Wandbeläge wie Tapeten, Kork, Leder, Filz, Textilien, Kunststoffe - insbesondere Bodenbeläge aus PVC, Linoleum und Poly-olefinen -, mineralische Substrate wie Glas, Quarz, Schlacken, Gestein und Keramik und Metalle. Die Kunststoffe können in Form von Folien, Platten oder sonstigen Formteilen vorliegen.

Die erfindungsgemäßen Polymere bzw. modifizierten Polymere eignen sich insbesondere zur Herstellung von Druckfarbenbindemitteln, Ktebestiften, Fußbodenbelagsklebstoffen, Allesklebern, Plastisolen, Schmelzklebstoffen bzw. von Schmelzdichtstoffen oder pastenförmigen Dichtstoffen wie Fugendichtungsmassen. Auch die Beschichtung von harten Oberflächen sowie von Textilien und Papier ist gut möglich.

Die erfindungsgemäßen Polymere bzw. modifizierten Polymere sind extrudierbar und damit spritzgußgeeignet. Sie können z.B. als Werkstoffe verwendet werden.

Die erfindungsgemäßen Polymere bzw. modifizierten Polymere, insbesondere die Salze und Umsetzungsprodukte mit Polyethylenglykolen, eignen sich als polymere Emulgatoren, Dispergatoren, Verdickungsmittel oder Builder für Waschmittel.

Die niedermolekularen Polymere bzw. modifizierten Polymere eignen sich als Weichharze und Klebrigmacher zur Modifizierung von anderen, handelsüblichen Polymeren und Polymerdispersionen.

Die Erfindung wird nun anhand von Beispielen im einzelnen erläutert:

### Beispiele

### A) Untersuchungsmethoden

1) Die Glasumwandlungs-Temperatur (TG) wurde folgendermaßen bestimmt: Meßzelle DSC 910 mit DuPont 2100, Al-Tiegel mit 5 Löchern im Deckel, 3 l/h N2, 20 K/Min..
2) Die Molekulargewichte wurden mittels Gelpermeationschromatographie (GPC) folgender Ausführung bestimmt:

| | |
|---|---|
| Laufmittel | Tetrahydrofuran p.a. |
| Säulensystem | Säulensatz Styragel der Firma Waters (6 hintereinander geschaltete Säulen mit 106, 105, 104, 103, 500 und 100 Angstroem, jeweils 300 x 7,8 mm) |
| Durchfluß | 1,0 ml/ min |
| Detektion | RI-Detektor RID 6A (Fa. Shimadzu) |
| Detektorbereich | 128 |
| Chromatotographie-datensystem | Spektra-Datensystem |
| Dauer | 75-90 min |
| Probenvorbereitung | ca. 100-200 mg Probe werden in 50 ml Meßkolben genau eingewogen und mit THF bis zur Marke gefüllt. Nach mindestens 8 Stunden Wartezeit werden Aliquote dieser Probelösungen mit Filtervorsatz filtriert und dann chromatographiert. |
| Eichung | Polystyrol mit verschiedenen Molekulargewichten in THF gelöst (Fa. PSS) |

Angegeben sind die Zahlenmittel (Mn) und die Gewichtsmittel (Mw) der Molekulargewichte.
3) Die Zugscherfestigkeiten wurden folgendermaßen bestimmt:

| | |
|---|---|
| Prüfkörper | Buchensperrholz, Hart-PVC, Aluminium Größe : 25 x 80 mm2 Klebefläche: 25 x 20 mm2 |
| Lagerung | Normklima 23°C/50 % rel. Feuchte Brutschrank, 40° + 0,5° C |
| Reißmaschine | Instron, Serie 4200 |

| Versuchsparameter | |
|---|---|
| Geschwindigkeit | 50 mm/Minute |
| Kraftaufnehmer | 10 KN (max.) |
| Steuerung | PC, Instron Materialprüfsystem 104 |
| Anzahl Prüfkörper | 5 je Probe |

4) Die fettchemischen Kennzahlen sind nach folgenden DGF-Methoden bestimmt

| | |
|---|---|
| Säurezahl (SZ) | DGF C-V 2 |
| Verseifungszahl (VZ) | DGF M-IV 2 |
| Hydroxylzahl (OHZ) | DGF C-V 17b |
| lodzahl (IZ) | DGF C-V 11d |

Angegeben sind Säurezahl (SZ), Verseifungszahl (VZ) und Hydroxylzahl (OHZ) in mg KOH/g. lodzahl (IZ) in g lod/100g

### B) Folgende Rohstoffe wurden verwendet:

1) Konjugenfettsäure Edenor UKD 60/10 (Handelsprodukt der Henkel KGaA) mit folgenden Spezifikationen:

| | |
|---|---|
| SZ | 198-203 |
| IZ | 138-148 |
| Anteil konjugierter Fettsäuren | 56-67% |
| Linolsäure | 2-9% |
| Ölsäure | 19-34% |

2) Ricinenfettsäure Dedico 5981 (Handelsprodukt der Unichema) mit folgenden Spezifikationen:

| | |
|---|---|
| SZ | 193-198 |
| VZ | 195-202 |

### C) Beispiele

### Beispiel 1:

### Umsetzung von Ricinenfettsäure mit Maleinsäureanhydrid

In einen 2 L-Dreihalsrundkolben wurden 900 g Ricinenfettsäure und 196,9 g Maleinsäureanhydrid eingewogen. Als Reaktor diente eine Rührapparatur mit zwei übereinander gesteckten Rückfluß-Kühlern. Der untere war an einen Thermostaten, der auf 55°C eingestellt war, angeschlossen, damit das Maleinsäureanhydrid nicht im Kühler kristallisierte. Der obere wurde mit Leitungswasser gekühlt. Es wurde langsam mit einem Heizpilz aufgeheizt. Bei 50°C Innentemperatur war das Maleinsäureanhydrid geschmolzen und die exotherme Reaktion begann. Nach Abklingen der Exothermie wurde auf 115°C erwärmt. Über 30 min nahm die Viskosität der gelb-orangen, klaren Flüssigkeit zu. Danach wurde die Heizung entfernt. Bei Raumtemperatur war das Produkt gelb, klar und hochviskos.

Nach GPC bestand das Produkt aus 2 Fraktionen. Der niedermolekulare Anteil von 51,7% hatte ein Molekulargewicht von Mn = 392 Dalton und Mw = 485 Dalton. Der hochmolekulare Anteil von 48,3% hatte ein Molekulargewicht von Mn = 15991 Dalton und Mw = 40402 Dalton.

### Beispiel 2:

a) Herstellung von Ricinenfettsäuremethylester
In eine Rührapparatur mit einem 6 L-Dreihalsrundkolben wurden 2000 g Ricinenfettsäure, 2193 g Methanol und 19,2 g Methansulfonsäure eingewogen. Es wurde auf 67°C mit einem Heizpilz aufgeheizt und am Rückfluß gekocht. Die bei Beginn klare, gelbe Flüssigkeit wurde im Laufe der Reaktion trüber. Nach etwa 8 h lag die Säurezahl bei 5, und die Reaktion war beendet. Im Vakuum (∼ 10 mbar) wurde bis 75°C das überschüssige Methanol/H2O abdestilliert. Mit heißem Wasser wurde dann das Produkt neutral gewaschen und anschließend getrocknet. Im Hochvakuum wurde dann bis zu einer Sumpftemperatur von 180°C der Methylester destilliert. Hierbei wurden 10% als Vorlauf genommen. Das Produkt war, nachdem es abgekühlt ist, gelb, klar und flüssig.

| | |
|---|---|
| Kennzahlen | SZ: 5,2 |
| | OHZ: 3 |
| | VZ: 192 |
| GPC | Mn =283 Dalton, Mw = 334 Dalton |

b) Umsetzung von Ricinenfettsäuremethylester mit Maleinsäureanhydrid
In einen 2 L-Dreihalsrundkolben wurden 600 g Ricinenfettsäuremethylester und 132 g Maleinsäureanhydrid vorgelegt. Es wurde eine Rührapparatur mit zwei Kühlem (siehe Beispiel 1) und ein Heizpilz als Heizquelle verwendet. Dann wurde auf 110°C aufgeheizt und 6 h gekocht. Danach war die Reaktion beendet. Das Produkt war bei Raumtemperatur gelb, klar und leicht zähflüssig.
Nach GPC bestand das Produkt aus 2 Fraktionen. Der niedermolekulare Anteil von 46,6% hatte ein Molekulargewicht von Mn = 364 Dalton und Mw = 431 Dalton. Der hochmolekulare Anteil von 53,4% hatte ein Molekulargewicht von Mn = 11905 Dalton und Mw = 32864 Dalton.
c) Andestillation des Ricinenfettsäuremethylester-MSA-Polymers
300 g des Umsetzungsprodukts von Ricinenfettsäuremethylester mit Maleinsäureanhydrid (Beispiel 2 a) wurden in einem 500 ml-Zweihalsrundkolben mit einem Heizpilz erhitzt. Unter magnetischer Rührung wurde im Hochvakuum bis 240°C Sumpftemperatur geheizt und destilliert. Der Rückstand (202,2 g) war ein extrem klebriges Harz, das Destillat (97,8 g) war hellgelb und flüssig.
Nach GPC bestand das Produkt aus 2 Fraktionen. Der niedermolekulare Anteil von 26,1% hatte ein Molekulargewicht von Mn = 462 Dalton und Mw = 517 Dalton.
Der hochmolekulare Anteil von 73,9% hatte ein Molekulargewicht von Mn = 9174 Dalton und Mw = 28957 Dalton.

### Beispiel 3:

### Umsetzung von Edenor UKD 60/10 mit Maleinsäureanhydrid

In eine Rührapparatur mit einem 2 L-Dreihalsrundkolben wurden 800 g Edenor UKD 60/10 und 192 g Maleinsäureanhydrid eingewogen. Beim langsamen Aufheizen sprang die Reaktion exotherm an, wobei die Temperatur auf über 100°C anstieg. Nach dem Abkühlen auf Raumtemperatur erhielt man ein gelbes, gummielastisches Material.
Nach GPC bestand das Produkt aus 2 Fraktionen. Der niedermolekulare Anteil von 35% hatte ein Molekulargewicht von Mn = 345 Dalton und Mw = 428 Dalton. Der hochmolekulare Anteil von 65% hatte ein Molekulargewicht von Mn = 9191 Dalton und Mw = 36486 Dalton.

### Beispiel 4:

a) Herstellung von Edenor UKD 60/10-Methylester
Zur Veresterung wurden 1820 g Edenor UKD 60/10, 2080 g Methanol und 15,6 g Methansulfonsäure in einen 6 L-Dreihalsrundkolben vorgelegt und Stickstoff übergeleitet. Nach 5 h bei 67°C (Rückfluß) hatte das Produkt eine Säurezahl von 4. Bei 80°C wurde eine Mischung von Methanol/H2O im Vakuum (ca. 10 mbar) abdestilliert. Anschließend wurde das Produkt mit heißem Wasser neutral gewaschen und anschließend getrocknet. Im Hochvakuum wurde ein Vorlauf von 5% genommen und dann bis zu einer Sumpftemperatur von 180°C destilliert. Der destillierte Methylester war gelb, klar und flüssig.

| | |
|---|---|
| SZ | 6,7 |
| VZ | 201 |
| OHZ | 2,3 |
| GPC | Mn = 304 Dalton und Mw = 356 Dalton |

b) Umsetzung von Edenor UKD 60/10-Methylester mit Maleinsäureanhydrid
In eine 4 I-Dreihalsrundkolben Rührapparatur wurden 1325g Edenor UKD 60/10-Methylester und 26,5 g Maleinsäureanhydrid eingewogen und 7 h bei 116°C gekocht. Das Produkt war nach dem Abkühlen gelb, klar und zähflüssig.
Nach GPC bestand das Produkt aus 2 Fraktionen: Der niedermolekulare Anteil von 48% hatte ein Molekulargewicht von Mn = 269 Dalton und Mw = 383 Dalton. Der hochmolekulare Anteil von 52% hatte ein Molekulargewicht von Mn = 12266 Dalton und Mw = 43936 Dalton.
c) Destillation von Edenor UKD 60/10-Methylester-MSA-Polymer
200 g des Umsetzungsprodukts von Edenor UKD 60/10 mit Maleinsäureanhydrid (Beispiel 4b) wurden in einem 500 ml-Zweihalsrundkolben mit einem Heizpilz erhitzt. Unter magnetischer Rührung wurde im Hochvakuum bis 240°C Sumpftemperatur geheizt und destilliert. Der Rückstand (138,7 g) war gelb und klebrig, das Destillat (71,3 g) war hellgelb und flüssig.
Nach GPC bestand das Produkt aus 2 Fraktionen. Der niedermolekulare Anteil von 21% hatte ein Molekulargewicht von Mn = 273 Dalton und Mw = 386 Dalton. Der hochmolekulare Anteil von 79% hatte ein Molekulargewicht von Mn = 11355 Dalton und Mw = 45113 Dalton.

### Beispiel 5:

a) Dämpfen des Edenor UKD 60/10-MSA-Polymers
   In einen 2 I-Vierhalsrundkolben wurden 500 g Edenor UKD 60/10 und 120 g Maleinsäure-anhydrid eingewogen. Reaktionsverlauf siehe Beispiel 3. Nach Beenden der Reaktion wurde die Apparatur um ein Wasserdampfeinleitungsrohr und eine Destillationsbrücke mit absteigendem Kühler erweitert. Es wurde dann bei 100°C 3 h lang Wasserdampf eingeleitet. Das Produkt war weiß und cremig. Nach einiger Zeit trennte sich Wasser ab.
b) Verseifung des Edenor UKD 60/10-MSA-Polymers mit KOH
   100 g des Umsetzungsprodukts von Edenor UKD 60/10 mit Maleinsäureanhydrid (siehe Beispiel 3) wurden in einen 500 ml-Dreihalsrundkolben vorgelegt. 64 g Kalilauge (50%ig) und 98,3 g Wasser wurden zugetropft. Bei 80°C wurde 3,5 h lang gerührt. Nach dem Abkühlen war das Produkt braun und viskos.
c) Verseifung des Edenor UKD 60/10-MSA-Polymers mit Ammoniak
   100 g des Umsetzungsprodukts von Edenor UKD 60/10 mit Maleinsäureanhydrid (siehe Beispiel 3) wurden in 400 g Aceton gelöst und mit 100 g Wasser versetzt. Die Lösung wurde unter Normaldruck in der Wärme auf ca. 200 ml eingeengt. Nach Abkühlen erhielt man eine weiße w/o-Emulsion, die Glas nicht benetzte. Nach 3 tägiger Lagerung veränderte sich die Farbe der Emulsion nach beige.
   Zu dieser Emulsion wurden in der Wärme 5 g Rilanit HRE 60 gegeben und unter kräftigem Rühren Ammoniak zugegeben, bis ein pH-Wert von 7 erreicht wurde. Nach dem Abkühlen erhielt man eine klare, braune und hochviskose Lösung. Die Lösung ist extrem fadenziehend und trocknet zu einem elastischen Film. Dieser versprödet innerhalb von 3-4 Wochen stark. Die Lösung war für das Kleben von Papier geeignet Die Abbindezeit betrug 2-3 Minuten. Es war keine Durchfettung zu beobachten.

### Beispiel 6:

### Umsetzung von Edenor UKD 60/10 mit Maleinsäureanhydrid unter Einwirkung von Radikatstartern

In 200 ml Aceton wurden 58,8 g Maleinsäureanhydrid und 280,0 g Edenor UKD 60/10 gelöst und mit einer Lösung von 2,2 g Dilauroylperoxid in 20 ml Aceton versetzt. Anschließend wurde unter Rühren langsam auf 64°C erwärmt und ca. 8 Stunden am Rückfluß gekocht.
Nach dem Abkühlen wurde die Hälfte der hochviskosen Lösung im Vakuum eingedampft. Man erhält einen stark haftklebrigen und weichen Polymerfilm.
Nach GPC bestand das Produkt aus 2 Fraktionen. Der niedermolekulare Anteil von 40% hatte ein Molekulargewicht von Mn = 333 Dalton und Mw = 407 Dalton. Der hochmolekulare Anteil von 60% hatte ein Molekulargewicht von Mn = 26551 Dalton und Mw = 81231 Dalton.

Aus der anderen Hälfte der Reaktionslösung wurde das entstandene Polymer durch Einrühren von ca. 250 g n-Hexan ausgefällt. Durch Abdekantieren wurden die Lösemittel weitgehend vom Polymer abgetrennt, das Polymer nochmals mit n-Hexan gewaschen und die verbliebenen Lösemittel durch Destillation entfernt. Man erhielt 110 g eines nahezu farblosen, transparenten und klebfreien Polymers, das gut löslich in Aceton, Tetrahydrofuran und Methanol war.
Nach GPC bestand das Produkt aus 2 Fraktionen: Der niedermolekulare Anteil von 12% hatte ein Molekulargewicht von Mn = 344 Dalton und Mw = 413 Dalton. Der hochmolekulare Anteil von 88% hatte ein Molekulargewicht von Mn = 27471 Dalton und Mw = 83444 Dalton.

| | |
|---|---|
| Schmelzbereich | > 150° nach dreiwöchiger Lagerung |
| TG | ca. 10°C (nach zweiwöchiger Laherung) |

### Beispiel 7:

### Umsetzung von Edenor UKD-60/10-Methylester mit Maleinsäureanhydrid unter Einwirkung von Radikalstartern

In 200 ml Aceton wurden 58,8 g Maleinsäureanhydrid und 294 g Edenor UKD 6010-Methylester (Beispiel 4) gelöst und mit einer Lösung von 2,3 g Dilauroylperoxid (DLP) in 20 ml Aceton versetzt. Anschließend wurde unter Rühren langsam auf 64 °C erwärmt und ca. 7 Stunden am Rückfluß gekocht. Nach dem Abkühlen wurde die Reaktionslösung im Vakuum eingedampft. Man erhielt eine hochviskose, goldgelbe Flüssigkeit, die mit ca. 800 g n-Hexan bei Raumtemperatur gerührt wurde. Dabei entstand ein weißer, stark fadenziehender Niederschlag. Nach Abdekantieren des Lösemittels und Trocknen des Rückstands im Vakuum erhielt man 210 g eines goldgelben, weichelastischen Polymers.

Nach GPC bestand das Produkt aus 2 Fraktionen. Der niedermolekulare Anteil von 10% hatte ein Molekulargewicht von Mn = 371 Dalton und Mw = 446 Dalton. Der hochmolekulare Anteil von 90% hatte ein Molekulargewicht von Mn = 24321 Dalton und Mw = 79116 Dalton.

| | |
|---|---|
| Schmelzbereich | 85-95°C |
| TG | -22 bis -32°C. |

### Beispiel 8:

### Umsetzung von Edenor UKD-60/10-Methylester mit Maleinsäureanhydrid (MSA) und Vinylacetat unter Einwirkung von Radikalstartern

In 200 g Aceton wurden bei Raumtemperatur ohne Erwärmen 280 g Edenor UKD60/10, 58,8 g MSA, 51,6 g Vinylacetat und 2,7 g DLP gelöst und die klare Lösung anschließend 7,5 Stunden bei ca. 70 °C am Rückfluß gekocht. Nach 2 Stunden war ein Viskositätsanstieg erkennbar; die Rückflußtemperatur ging bis zum Abruch der Reaktion kontinuierlich bis auf 65°C zurück. Am nächsten Tag wurden 110 g Aceton abdestilliert und der Destillationsrückstand gereinigt, d.h. es wurden mit 2 x je ca. 500 g Hexan die niedermolekularen Anteile extrahiert. Nach Abdekantieren des Lösemittels und Trocknen des Rückstands im Vakuum erhielt man ein klares, farbloses, nicht klebriges, wenig elastisches Polymer.
Nach GPC bestand das Produkt aus 2 Fraktionen: Der niedermolekulare Anteil von 10% hatte ein Molekulargewicht von Mn = 371 Dalton und Mw = 446 Dalton. Der hochmolekulare Anteil von 86% hatte ein Molekulargewicht von Mn = 64231 Dalton und Mw = 1698000 Dalton.

| | |
|---|---|
| TG | +23°C. |

### Beispiel 9:

### Umsetzung von Edenor UKD-60/10-Methylester mit Maleinsäureanhydrid und Acrylsäure unter Einwirkung von Radikalstartern

In 200 g Aceton wurden bei Raumtemperatur ohne Erwärmen 280 g Edenor UKD60/10, 58,8 g MSA, 43,2 g Acrylsäure und 2,7 g Dilauroylperoxid gelöst und die klare Lösung anschließend 7,5 Stunden bei ca. 71 °C unter Rückfluß gekocht. Nach 2 Stunden ist ein Viskositätsanstieg erkennbar; die Rückflußtemperatur ging bis zum Abruch der Reaktion kontinuierlich bis auf 67°C zurück. Am nächsten Tag wurden 114 g Aceton abdestilliert und der Destillationsrückstand gereinigt, d.h. es wurden 2 x je ca. 500 g Hexan die niedermolekularen Anteile extrahiert. Nach Abdekantieren des Lösemittels und Trocknen des Rückstands im Vakuum erhielt man ein klares, farbloses, nicht klebriges, wenig elastisches Polymer
Nach GPC bestand das Produkt aus 2 Fraktionen. Der niedermolekulare Anteil von 10% hatte ein Molekulargewicht von Mw = 511 Dalton. Der hochmolekulare Anteil von 90% hatte ein Molekulargewicht von Mn = 47048 Dalton und Mw = 142730 Dalton.

| | |
|---|---|
| TG | +16°C. |

### Beispiel 10:

### Reinigung eines Edenor UKD 60/10/MSA-Polymers

Zur Herstellung eines besonders reinen Polymers wurden analog zuBeispiel 6 601g Edenor UKD 60/10, 127 g MSA und 7.1 g Dilauroylperoxid in Methylethylketon/Petrolether (472 g und 728 g) umgesetzt. Zur Reinigung wurde das primär ausfallende Polymer mit 300 g Petrolether gewaschen, anschließend in 200 g Methylethylketon aufgenommen und mit 600 g Petrolether gefällt. Anschließend wurde das Polymer nochmals mit 400 g Petrolether gewaschen und danach getrocknet. Das Produkt war farblos und fest (GPC: 92% Polymer). Zur weiteren Reinigung wurde das Polymer abermals in Methylethylketon gelöst, mit Petrolether gefällt und viermal mit je 300 g Petrolether gewaschen. Das Produkt war farblos und fest (GPC: 98.6 % Polymer mit Mn=40.000 und Mw=95.000)

### Beispiel 11:

### Hydrierung eines Edenor UKD 60/10/MSA-Polymers

Analog zu Beispiel 6 wurde aus 650 g Edenor UKD 60/10, 137 g MSA und 7.9 g Dilauroylperoxid in Methylethylketon/Petrolether (516 g und 787 g) ein Polymer hergestellt. Die Aufreinigung erfolgte durch Waschen mit 300 g Petrolether (GPC: 89 % Polymer mit Mn=41.000). 100g einer 50 %igen Lösung dieses Produktes in THF wurden mit 300 g THF und 1.25 g Palladium auf Kohle versetzt. Bei 80 °C und 100 bar Wasserstoffdruck wurde 6 Stunden hydriert. Das Produkt wurde über Celite filtriert, das Lösungsmittel evaporiert und das Produkt anschließend getrocknet. Das Produkt war farblos und spröde. Das GPC zeigt ein breites Signal bei Mn=500.000 und einem Mw>10 Mio. mit einem Anteil von 85 %.

### Beispiel 12:

### Umsetzung eines Edenor UKD 60/10/MSA-Polymers mit Oleylalkohol

Unter Rühren wurden 200 g einer 50 %igen Lösung eines Umsetzungsproduktes analog zu Beispiel 6 aus 650 g Edenor UKD 60/10 und 137 g MSA mit 15.8 g Dilauroylperoxid in Methylethylketon/Petrolether (516 g und 787 g) umgesetzt und durch Waschen mit 300g Petrolether gereinigt. GPC: 82% Polymer mit Mn=42.000) in THF mit 72.5 g Oleylalkohol (Ocenol 90/95 der Fa. Henkel) 3 Stunden bei 70°C umgesetzt. Nach dem Evaporieren des THF wurde mit 110 g Wasser und 16 g 50%iger Natronlauge versetzt und 1 Stunde bei Raumtemperatur gerührt. Die resultierende, etwa 50 %ige Lösung ist klar und hochviskos.

### Beispiel 13:

### Umsetzung eines Edenor UKD 60/10/MSA-Polymers mit Ethylenglykol

Unter Rühren wurden 0.6 g Ethylenglykol mit 50 g einer 15 %igen Lösung eines Umsetzungsproduktes analog Beispiel 6 (650 g Edenor UKD 6010 und 137 g MSA mit 15.8 g Dilauroylperoxid in Methylethylketon/Petrolether (516 g und 787 g), Reinigung durch Waschen mit 300 g Petrolether, GPC: 82 % Polymer mit Mn=42.000) in THF 4 Stunden lang refluxiert. Es entstand eine farblose, klare Lösung. Die Lösung wurde auf einer Teflonplatte in einen Film umgewandelt. Der Film war klar, farblos und hart. Das GPC zeigt ein Signal bei Mn=32.600 mit einem Anteil von 89 %, zwei Signale mit Peakwerten kleiner 1 000 und einem Gesamtanteil von 11 %.

### Beispiel 14:

### Umsetzung eines Edenor UKD 60/10/MSA-Polymers mit Polyethylenglykol

Unter Rühren wurden 11.9g Polyethylenglykol 600, gelöst in der gleichen Menge THF, mit 50 g einer 10 %igen Lösung eines Umsetzungsproduktes analog Beispiel zu 6 (650g Edenor UKD 60/10 und 137g MSA mit 15.8g Dilauroylperoxid in Methylethylketon/Petrolether (516g und 787g), Reinigung durch Waschen mit 300 g Petrolether; GPC: 82 % Polymer mit Mn=42.000) in THF und 0.56 g N-Methylimidazol 1 Stunde lang auf 64 °C erwärmt. Es entstand eine gelbe, trübe Lösung. Nach dem Erkalten wurde die erstarrte Lösung zu einem Gel, das sich leicht zu Vibrationen anregen ließ.

### Beispiel 15:

### Umsetzung eines Edenor UKD 60/10/MSA-Polymers mit Magnesiumoxid

38.0 g einer 50 %igen Lösung des Umsetzungsproduktes analog zu Beispiel 6 (650 g Edenor UKD 60/10 und 137 g MSA mit 15.8 g Dilauroylperoxid in Methylethylketon/Petrolether (516 g und 787 g), Reinigung durch Waschen mit 300g Petrolether; GPC: 82% Polymer mit Mn=42.000) in THF wurden mit 2.0 g Magnesiumoxid intensiv verrührt. Die Mischung wurde bei 75°C 2 Stunden im Vakuum getrocknet und ergab eine in der Wärme elastische, bei Raumtemperatur harte, hellgelbe Masse.

### Beispiel 16:

### Vollständige Veresterung eines Edenor UKD 60/10/MSA-Polymers

Ein Konjudienfettsäure-MSA-Polymer analog zu Beispiel 6 wurde ohne Katalysator mit überschüssigem Methanol zum Halbester umgesetzt (SZ = 145 mg KOH/g). 26,15 g dieses Methylhalbester-Polymers wurden in 200 g Dimethylformamid gelöst und unter Rühren 19,2 g Methyljodid zugegeben. Nach 15 Minuten wurde in die von blaßgelb nach goldgelb verfärbte Lösung 79,2 g einer 25%igen Tetrabutylammoniumhydroxid-Lösung in Methanol innerhalb von 45 Minuten langsam zugetropft. Nach 10 bis 15 Minuten wurde die ursprünglich klare Lösung trüb. Die Lösemittel wurden abdestilliert, der Rückstand in 200 ml Tetrahydrofuran (THF) aufgenommen und der THF-unlösiche Anteil abgetrennt. Nach Zugabe von ca. 700 ml Methanol zu dem klaren Filtrat fiel das Polymer aus und die überstehende Lösung wurde abdekantiert. Von dem erhaltenen Polymer wurden dann die Restlösemittel mittels Vakuumdestillation entfernt. Man erhielt ein hellgelbes, weiches, sehr elastisches und klebriges Polymer, welches keine niedermolekularen Bestandteile mehr enthielt.

| | |
|---|---|
| Molekulargewicht (GPC) | MW 93000 |
| SZ | 4,6 mg KOH/g |

### Beispiel 17:

### Umsetzung eines Edenor UKD 60/10/MSA-Polymers mit Butylamin zu einem Butylimid

a) Herstellung des Halbamids
300,1 g des Polymers von Beispiel 6 wurden mit ca, 500 g Tetrahydrofuran gelöst. Dann wurde eine Lösung von 55,0 g n-Butylamin in ca. 60 g Tetrahydrofuran langsam unter Rühren zugetropft. Nach vollständiger Zugabe wurde die Lösung 2 Stunden unter Rückfluß gekocht und anschließend das Lösungsmittel abdestilliert.

| | |
|---|---|
| Ausbeute: | 355,2 Polymer |
| | |
| Aussehen des Polymers (Halbamid) | gelbbraun, wenig elastisch, nicht klebrig |
| SZ | 252 mg KOH/g (theor. 249) |

:
b) Umsetzung des Halbamids zum Imid
200 g des Butylamids wurden mit ca. 200 g Cumol gemischt und die Mischung bis zum Sieden (ca. 155 °C) erhitzt und 3,5 Stunden mit einem Wasserabscheider am Rückfluß gekocht. Dann wurde das Cumol abdestilliert. Die abgeschiedene Wassermenge betrug 7,4 ml. Nach GPC bestand das Produkt aus 2 Fraktionen. Das erhalten Konjudienfettsäure-N-Butylmaleinimd-Polymer ist goldgelb, sehr elastisch und klebrig. Der niedermolekulare Anteil von 22% hatte ein Molekulargewicht von Mw = 508 Dalton. Der hochmolekulare Anteil von 78% hatte ein Molekulargewicht von Mn = 52602 Dalton und Mw = 153855 Dalton.

| | |
|---|---|
| SZ | 140 mg KOH/g (theor. 130) |

### Beispiel 18:

### Klebeversuche einer 50 %igen Lösung der Polymere in THF

Gemessen wurde die Zugscherfestigkeit in N/mm2 an verschiedenen Substraten nach einer Lagerung von 7 Tagen bei Raumtemperatur (RT = ca. 20 °C) bzw. nach einer Lagerung von 4 Wochen bei 40 °C.

| Beispiel | 6 | 5a | 17b |
|---|---|---|---|
| Holz/Holz 7 Tage, RT | 4,01 | 3,92 | 2,72 |
| Holz/PVC 7 Tage, RT | 1,02 | 0,41 | 1,96 |
| Holz/Alu 7 Tage, RT | 1,77 | 4,52 | 1,35 |
| Holz/Alu 4 Wo, 40 °C | 3,41 | 1,95 | 3,49 |

## Patentansprüche

1. Polymer auf der Basis eines konjugierten Diens und einer dienophilen Komponente, **dadurch gekennzeichnet, daß** es herstellbar ist aus
A) mindestens einer aliphatischen ungesättigten Carbonsäure mit 6 bis 32 C-Atomen mit konjugierter C-C-Doppelbindung bzw. deren Derivate,
B) mindestens einer der Komponenten: Malein-, Citracon-, Itacon-, Aconit-, 3,4,5,6-Tetrahydrophthalsäure sowie deren Derivate und gegebenenfalls
C)zumindest einer copolymerisierbaren Alken-Komponente ohne Elektronenakzeptor-Substituenten,
wobei das Molverhältnis der Komponenten A : B : C im Bereich von 1 : 0,1 bis 10 : 0 bis 10 liegt und das Molekulargewicht Mw der Copolymeren über 5000 liegt.

2. Polymer nach Anspruch 1, **gekennzeichnet durch** das Molverhältnis der Komponenten A: B : C von 1 : 0,5 bis 1,5 : 0,2 bis 10.

3. Polymer nach Anspruch 1 oder 2, **dadurch gekennzeichnet, daß** die Fettsäure mit konjugierter Doppelbindung bzw. deren Derivate mindestens eine der folgenden Stoffe ist:
Ricinenfettsäure, Ricinenfettsäuremethylester, ungesättigte konjugierte Dien-Fettsäuren, -Fettsäurenmethylester, dehydratisiertes Ricinusöl, konjugiertes Färberdistelöl und Sonnenblumenöl.

4. Polymer nach einem der vorangegangenen Ansprüche, **dadurch gekennzeichnet, daß** die Komponente B Maleinsäure sowie deren Derivate ist.

5. Polymer nach mindestens einem der vorangegangenen Ansprüche, **dadurch gekennzeichnet, daß** als Komponente C Vinylether, Vinylester, Styrol und Vinylpyrrolidon verwendet wird.

6. Polymer nach mindestens einem der vorangegangenen Ansprüche, **dadurch gekennzeichnet, daß** das Molekulargewicht mindestens 10000 beträgt, gemessen nach Gelpermeationschromatographie.

7. Verfahren zur Herstellung der Polymere nach mindestens einem der vorangegangenen Ansprüche, **dadurch gekennzeichnet, daß** man die Reaktionskomponenten A und B sowie gegebenenfalls C mischt und erwärmt.

8. Verfahren nach Anspruch 7, **dadurch gekennzeichnet, daß** man das Reaktionsgemisch mit einem Lösungsmittel verdünnt.

9. Verfahren nach Anspruch 7 oder 8, **dadurch gekennzeichnet, daß** man das Reaktionsgemisch auf 20 bis 250°C, vorzugsweise auf 80 bis 200 °C erwärmt, wenn kein Katalysator zugesetzt wird, und auf Temperaturen von 0 bis 200, vorzugsweise von 30 bis 150 °C erwärmt, wenn ein Radikalbildender Initiator verwendet wird.

10. Verfahren nach mindestens einem der Ansprüche 7, 8 oder 9, **dadurch gekennzeichnet, daß** man einen Radikal-bildenden Initiator verwendet.

11. Verwendung der Polymeren nach mindestens einem der vorangegangenen Ansprüche zum Beschichten, Kleben, Dichten, Füllen und als Werkstoff.

12. Verwendung des Polymeren nach mindestens einem der vorangegangenen Ansprüche 1 bis 10 als Builder, als Stabilisator von Emulsionen und als Verdicker.

## Claims

1. A polymer based on a conjugated diene and a dienophilic component, **characterized in that** it is obtainable from
A) at least one aliphatic unsaturated C₆₋₃₂ carboxylic acid with a conjugated C-C double bond or a derivative thereof,
B) at least one of the components: maleic acid, citraconic acid, itaconic acid, aconitic acid, 3,4,5,6-tetrahydrophthalic acid and derivatives thereof and optionally
C) at least one copolymerizable alkene component with no electron acceptor substituents,
the molar ratio of component A to component B to component C being 1:0:1 to 10:0 to 10 and the molecular weight Mw of the copolymers being over 5,000.

2. A polymer as claimed in claim 1, **characterized by** a molar ratio of component A to component B to,component C of 1:0.5 to 1.5:0.2 to 10.

3. A polymer as claimed in claim 1 or 2, **characterized in that** the fatty acid with a conjugated double bond or a derivative thereof is at least one of the following substances: ricinene fatty acid, ricinene fatty acid methyl ester, unsaturated conjugated diene fatty acids, fatty acid methyl esters, dehydrated castor oil, conjugated safflower oil and sunflower oil.

4. A polymer as claimed in any of the preceding claims, **characterized in that** component B is maleic acid and derivatives thereof.

5. A polymer as claimed in at least one of the preceding claims, **characterized in that** component C is vinyl ether, vinyl ester, styrene or vinyl pyrrolidone.

6. A polymer as claimed in at least one of the preceding claims, **characterized in that** the molecular weight is at least 10,000, as measured by gel permeation chromatography.

7. A process for the production of the polymers claimed in at least one of the preceding claims, **characterized in that** reaction components A and B and optionally C are mixed and heated.

8. A process as claimed in claim 7, **characterized in that** the reaction mixture is diluted with a solvent.

9. A process as claimed in claim 7 or 8, **characterized in that** the reaction mixture is heated to 20 to 250°C and preferably to 80 to 200°C if no catalyst is added and to temperatures of 0 to 200°C and preferably to temperatures of 30 to 150°C when a radical-forming initiator is used.

10. A process as claimed in at least one of claims 7, 8 and 9, **characterized in that** a radical-forming initiator is used.

11. The use of the polymers claimed in at least one of the preceding claims for coating, bonding, sealing, filling and as a material.

12. The use of the polymer claimed in at least one of claims 1 to 10 as a builder, as an emulsion stabilizer and as a thickener.

## Revendications

1. Polymère à base d'un diène conjugué et d'un composant diénophile,
**caractérisé en ce qu'**
il peut être préparé à partir d'
a) au moins un acide carboxylique non saturé aliphatique ayant de 6 à 32 atomes de carbone comportant une double liaison C-C conjuguée, ou ses dérivés,
b) au moins un des composants : acide maléique, citraconique, itaconique, aconitique, 3,4,5,6-tétrahydrophtalique ainsi que leurs dérivés et le cas échéant
c) au moins un composant d'alkène copolymérisable sans substituant accepteur d'électron,
le rapport molaire des composants A : B : C étant dans la zone de 1 :0,1 à 10 : 0 à 10 et le poids moléculaire Mw des copolymères étant au-dessus de 5000.

2. Polymère selon la revendication 1,
**caractérisé par**
le rapport molaire des composants A : B : C allant de 1 : 0,5 à 1,5 : 0,2 à 10.

3. Polymère selon la revendication 1 ou la revendication 2,
**caractérisé en ce que**
l'acide gras ayant une double liaison conjuguée ou ses dérivés est au moins une des substances suivantes :
acides gras de ricin, ester méthylique d'acides gras de ricin, acides gras diéniques conjugués non saturés, ester méthylique d'acides gras conjugués non saturés, huile de ricin déshydratée, huile de chardon teinturier, et huile de tournesol conjugués.

4. Polymère selon l'une des revendications précédentes,
**caractérisé en ce que**
le composant B est l'acide maléique ainsi que ses dérivés.

5. Polymère selon au moins une des revendications précédentes,
**caractérisé en ce que**
comme composant C on utilise l'éther vinylique, l'ester vinylique, du styrène et de la vinylpyrolidone.

6. Polymère selon au moins une des revendications précédentes,
**caractérisé en ce que**
le poids moléculaire s'élève à au moins 10 000 mesuré par chromatographie de perméation de gel.

7. Procédé de préparation des polymères selon au moins une des revendications précédentes,
**caractérisé en ce qu'**
on mélange et chauffe les composants de réaction A et B ainsi qu'éventuellement C.

8. Procédé selon la revendication 7,
**caractérisé en ce qu'**
on dilue le mélange réactionnel avec un solvant.

9. Procédé selon la revendication 7 ou la revendication 8,
**caractérisé en ce qu'**
on chauffe le mélange réactionnel à 20 à 250°C, de préférence à 80 à 200°C lorsqu'aucun catalyseur n'est ajouté et on chauffe à des températures allant de 0 à 200°C, de préférence de 30 à 150°C lorsqu'on utilise un promoteur qui forme des radicaux.

10. Procédé selon au moins une des revendications 7, 8 ou 9,
**caractérisé en ce qu'**
on utilise un promoteur qui forme des radicaux.

11. Utilisation des polymères selon au moins l'une des revendications précédentes en vue du revêtement, du collage, de l'étanchéité, du remplissage et comme matériau de façonnage.

12. Utilisation des polymères selon au moins l'une des revendications précédentes 1 à 10, comme agent de structuration, comme agent de stabilisation d'émulsions et comme agent épaississant.
